Europäisches Patentamt

(19) European Patent Office

Office européen des brevets

(11) Numéro de publication: **0 010 542**

**B1**

(12) **FASCICULE DE BREVET EUROPEEN**

(45) Date de publication du fascicule du brevet: **21.04.82**

(21) Numéro de dépôt: **79900149.0**

(22) Date de dépôt: **08.02.79**

(86) Numéro de dépôt international:
**PCT/FR79/00011**

(87) Numéro de publication internationale:
**WO 79/00651 06.09.79 Gazette 79/18**

(51) Int. Cl.³: **E 02 F 9/08, B 62 D 25/00**

(54) **Engin de travaux publics, tel que pelle hydraulique automotrice articulée.**

(30) Priorité: **22.02.78 FR 7805036**

(43) Date de publication de la demande:
**14.05.80 Bulletin 80/10**

(45) Mention de la délivrance du brevet:
**21.04.82 Bulletin 82/16**

(84) Etats contractants désignés:
**CH DE GB SE**

(56) Documents cités:
**CH - A - 373 712**
**CH - A - 470 542**
**CH - A - 501 785**
**FR - A - 1 370 019**
**FR - A - 1 519 756**
**FR - A - 2 003 692**
**FR - A - 2 083 932**

(73) Titulaire: **SOCIETE ANONYME MANUBAT-PINGON**
**Route de la Gare**
**F-01300 Belley (FR)**

(72) Inventeur: **DUFOUR, Serge**
**Rue du Clos-Joli**
**F-01300 Belley (FR)**

(74) Mandataire: **Peuscet, Jacques**
**Cabinet Peuscet 3, Square de Maubeuge**
**F-75009 Paris (FR)**

Courier Press, Leamington Spa, England.

Engin de travaux publics, tel que pelle hydraulique automotrice articulée.

La présente invention se rapporte d'une façon générale aux engins de travaux publics tels que les pelles hydrauliques.

Les pelles hydrauliques automotrices connues comportent la plupart du temps un châssis rigide muni de quatre roues, dont deux au moins sont motrices, et sur lequel sont fixées une ou deux paires de stabilisateurs. Ce châssis est surmonté d'une superstructure orientable à une extrémité de laquelle est articulé un équipement de travail.

Un inconvénient de ces machines réside dans le fait qu'elles présentent des aptitudes médiocres à un déplacement sur mauvais terrain, en raison de leur faible garde au sol et des faibles angles de fuite résultant de la présence des stabilisateurs. De même, le déplacement sur un terrain incliné dans une direction perpendiculaire à la pente de ce terrain est limité à des inclinaisons de faible valeur, car on atteint rapidement la limite de basculement latéral de l'engin. En outre, il est impossible de creuser une tranchée verticale perpendiculairement à la direction de la pente du fait du faible débattement des stabilisateurs ou des roues, qui ne permet pas de placer la machine dans une position horizontale.

Selon une construction connue, telle que décrite dans le brevet CH—A—373 712, les roues sont montées sur de bras pivotants et la machine comporte une embase munie de traverses à ses extrémités et sur laquelle elle vient reposer lors du travail, par relèvement des bras porteroues. L'embase comprend alors en son centre une couronne d'orientation sur laquelle l'ensemble de la superstructure, sur laquelle les bras porte-roues sont montés, peut tourner tandis que l'embase prend appui sur le sol. Ces bras porte-roues sont abaissés pour le déplacement, mais malgré l'amélioration obtenue la présence des traverses de stabilisation diminue les angles d'attaque et de fuite.

Il est connu également, comme décrit dans le brevet FR—A—1 519 756, de réaliser une machine comprenant une semelle sur laquelle une superstructure portant un équipement de travail est montée de façon orientable autour d'un axe vertical. Cette superstructure porte des bras pivotant aux extrémités libres desquels sont montées des roues. Pour le travail, ces roues sont relevées et la machine prend appui sur le sol par sa semelle. Pour le déplacement, les roues sont abaissées. Il est toutefois alors nécessaire de soutenir au moins la partie de la machine opposée aux roues, soit par appui sur le godet de l'équipement de travail pour un déplacement de faible amplitude, soit au moyen d'un véhicule tel qu'un tracteur. En outre, une telle machine n'est pas automotrice.

On a déjà proposé, comme décrit dans la demande de brevet FR—A—2 003 692, pour pouvoir par exemple creuser des tranchées verticales dans une direction perpendiculaire à une pente, de réaliser une machine munie d'une paire de roues montées sur des bras porte-roues pouvant pivoter sur une extrémité d'un châssis et d'une paire de stabilisateurs prévue à l'autre extrémité de ce châssis, la superstructure pouvant pivoter sur ledit châssis par une couronne d'orientation. La commande différentielle des bras porte-roues et des stabilisateurs permet de maintenir la machine dans une position verticale, perpendiculairement à la pente. Toutefois, une telle machine ne peut pas se déplacer sur route par elle-même. Elle doit être transportée sur un véhicule à plate-forme et elle se déplace sur le chantier en prenant appui sur l'équipement de travail.

Le but de l'invention est de remédier aux inconvénients des machines existantes et de permettre la réalisation d'une pelle hydraulique automotrice capable de se déplacer à la fois sur route et sur un mauvais terrain grâce à sa garde au sol réglable, et capable en outre de travailler sur des terrains ayant un angle de pente élevé, dans des conditions permettant, si désiré, de creuser des tranchées verticales perpendiculairement à la pente du terrain.

L'invention est matérialisée dans un engin de travaux publics tel que pelle hydraulique automotrice, comprenant un châssis inférieur muni de deux roues porteuses et de stabilisateurs relevables ou effaçables, de telle sorte que ce châssis puisse prendre appui sur le sol de façon sélective simplement par ses roues porteuses ou à la fois par lesdites roues porteuses et par ses stabilisateurs, et une superstructure portant un équipement de travail et montée de façon orientable autour d'un axe vertical sur ce châssis inférieur, caractérisé en ce qu'une paire de roues porteuses est disposée sur cette superstructure, des moyens étant prévus pour déplacer cette paire de roues porteuses entre une position d'appui sur le sol et une position relevée.

D'une façon avantageuse, des moyens sont prévus pour faire varier la position des roues porteuses du châssis inférieur relativement à celui-ci, pour régler la garde au sol de la machine, ces moyens étant agencés de préférence de façon à permettre le relevage de ces roues porteuses pour faire reposer la machine sur le sol par son châssis inférieur.

Judicieusement, les moyens de déplacement des roues porteuses comprennent des bras pouvant pivoter autour d'axes horizontaux et portant l'une au moins des paires de roues porteuses du châssis inférieur ou de la superstructure et des moyens tels que des vérins hydrauliques ou analogues, prévus pour commander le pivotement de ces bras pour le réglage et le relevage des roues porteuses. Suivant une disposition avantageuse, les axes horizontaux de pivotement des bras porte-roues sont orientés transversalement à l'axe longitudinal de la machine.

Suivant une disposition préférentielle, les stabilisateurs sont montés sue les côtés opposés du châssis inférieur de manière à pouvoir pivoter autour d'axes horizontaux, et des moyens tels que des vérins hydrauliques sont prévus pour assurer leur déplacement entre une position de travail et d'appui sur le sol et une position relevée. On comprendra toutefois que ces stabilisateurs pourraient être prévus sur une face terminale du châssis inférieur. De façon judicieuse, ces stabilisateurs sont également montés de façon à pouvoir pivoter autour d'axes verticaux, ce qui permet de régler leur orientation par rapport au châssis inférieur, pour fournir une stabilité optimum adaptée aux conditions de terrain rencontrées.

Une disposition appropriée consiste à prévoir les roues porteuses du châssis inférieur vers une extrémité de celui-ci et les stabilisateurs vers son autre extrémité, afin d'augmenter la stabilité au travail.

Le montage orientable de la superstructure sur le châssis inférieur peut être assuré au moyen d'une couronne d'orientation en soi classique sur ce type de machines et comprenant une couronne dentée attaquée par un pignon ou organe analogue. Suivant une autre particularité de l'invention, des moyens sont prévus pour assurer l'entraînement de ce pignon, et ainsi de la couronne d'orientation, de façon sélective à partir d'un mécanisme d'orientation ou à partir d'un volant de conduite de la machine, de sorte que la direction de la machine pendant son transport ou son déplacement est assurée par articulation du châssis inférieur et de la superstructure, reposant chacun sur le sol par une paire de roues, autour de l'axe de la couronne d'orientation. On comprendra toutefois que ces mouvements d'orientation ou de direction de la machine par articulation peuvent être obtenus par d'autres moyens, par exemple par des vérins hydrauliques.

Les moyens d'entraînement du pignon peuvent comprendre un moteur tel qu'un moteur hydraulique entraînant les roues motrices par l'intermédiaire d'une boîte de transfert ou d'un ensemble analogue et de transmissions logées dans les arbres porte-roues, un arbre de sortie de la boîte de transfert étant alors relié au dispositif de commande de la couronne d'orientation, ce dispositif étant relié par ailleurs par des moyens débrayables au volant de conduite de la machine.

Le dispositif de commande d'orientation peut également comprendre un petit moteur hydraulique pouvant être relié, à travers des valves ou organes équivalents, au système hydraulique de la machine ou au volant de conduite.

On comprendra que l'invention permet ainsi de réaliser une machine capable de se déplacer par ses propres moyens, aussi bien sur route que sur un chantier, lorsque les deux paires de roues prennent appui sur le sol. La commande des bras porte-roues permet de régler la garde au sol et ainsi d'obtenir sur route un abaissement du centre de gravité, fournissant une meilleure stabilité, et une capacité de franchissement d'obstacles sur un terrain accidenté, par l'augmentation de la garde au sol. Une commande différentielle des bras porte-roues du châssis inférieur et le montage en parallèle des vérins des bras porte-roues de la superstructure permettent également à la machine de se déplacer perpendiculairement à la pente d'un terrain tout en demeurant horizontale. La direction de la machine pendant son déplacement est alors assurée par articulation de ses deux parties autour de l'axe de la couronne d'orientation.

Pour le travail, l'appui des stabilisateurs sur le sol dans la position d'orientation désirée et le relevage des roues de la superstructure fournissent pour la machine une bonne stabilité et permettent la libre orientation de la superstructure, avec son équipement de travail, sur 360°. Dans cette condition, la commande différentielle des vérins des bras porte-roues et des vérins de stabilisateurs permet ici encore de maintenir la machine dans une position horizontale, même sur un terrain en dévers, ce qui facilite le travail et rend possible le creusement de tranchées verticales dans une direction perpendiculaire à la pente du terrain.

La description qui va suivre, faite en regard des dessins annexés, donnés à titre non limitatif, permettra de mieux comprendre l'invention.

La Fig. 1 est une vue en élévation de la pelle hydraulique automotrice suivant l'invention, dans sa position de déplacement sur route.

La Fig. 2 est une vue en plan correspondante.

La Fig. 3 est une vue de profil analogue à la Fig. 1, mais montrant la pelle lors de sa mise en condition de travail.

La Fig. 4 est une vue en plan correspondante.

La Fig. 5 est une vue analogue à la Fig. 3, montrant la condition de travail préférentielle de la pelle, dans laquelle l'équipement de travail est orienté vers les stabilisateurs.

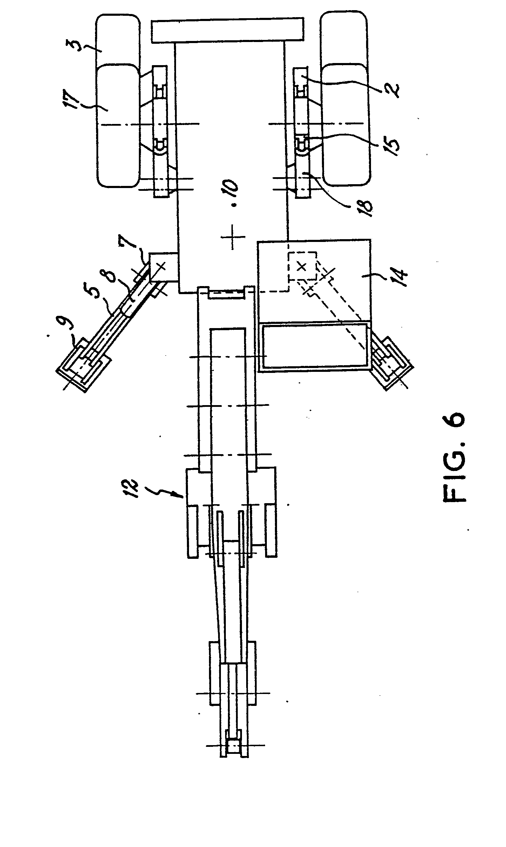

La Fig. 6 est une vue en plan correspondante.

La Fig. 7 est une vue d'extrémité montrant la machine dans une condition lui permettant de creuser une tranchée verticale perpendiculairement à la direction de la pente d'un terrain.

Les Fig. 8 et 9 sont des représentations schématiques de deux modes de réalisation de systèmes de propulsion, d'orientation et de direction de la pelle hydraulique.

La pelle hydraulique automotrice représentée sur les dessins comprend un châssis inférieur 1 à une extrémité duquel sont articulés des bras 2 pouvant pivoter autour d'un axe horizontal perpendiculaire à la direction longitudinale de ce châssis inférieur 1 et portant des roues avant 3. La commande des bras 2 est assurée au moyen de vérins 4 également articulés sur ce châssis inférieur 1.

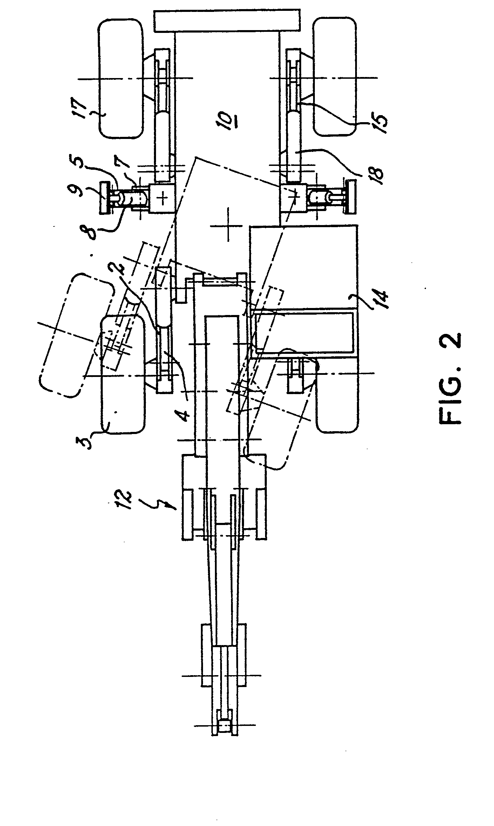

Des stabilisateurs 5 sont prévus vers l'autre extrémité de ce châssis inférieur 1, sur chacun de ses côtés. Ils sont articulés autour d'un axe horizontal 6 sur un support 7 qui lui-même peut pivoter sur le châssis 1 autour d'un axe vertical. La commande des stabilisateurs 5 dans le plan vertical est assurée au moyen de vérins 8 (Fig. 2).

Des moyens (non représentés) sont prévus sur le châssis inférieur de façon à assurer l'orientation des stabilisateurs 5 autour de l'axe vertical de pivotement des supports 7, entre une position orientée en principe à 90° par rapport à l'axe longitudinal du châssis inférieur 1 et diverses positions d'inclinaison sur cet axe longitudinal, à l'opposé des roues 3. Les stabilisateurs 5 sont munis de patins inférieurs 9, d'une manière en soi connue.

Une superstructure désignée d'une façon générale par la référence 10 est montée sur le châssis inférieur 1 de façon à pouvoir pivoter sur 360° au moyen d'une couronne d'orientation 11. Cette superstructure porte, vers une extrémité, un équipement de travail qui peut être en soi classique et qui est désigné dans son ensemble par la référence 12, et son autre extrémité un lest ou contrepoids indiqué en 13. Une cabine 14, destinée au conducteur, est prévue sur la superstructure à côté de l'équipement de travail 12.

Bien qu'on ait représenté ici un équipement de travail comprenant une flèche en deux parties assemblées, un bras articulé sur cette flèche et un godet travaillant en rétro, on comprendra que ledit équipement peut être agencé de toute manière désirée et peut être également interchangeable, sans s'écarter de l'invention.

A l'opposé de l'équipement de travail 12, la superstructure 10 porte, vers sa partie inférieure, des bras porte-roues 15 pouvant pivoter sur la superstructure 10 autour d'axes horizontaux 16 perpendiculaires à l'axe longitudinal normal de la machine. Ces bras 15 portent des roues 17 et leur pivotement est commandé au moyen de vérins hydrauliques 18. Dans le mode de réalisation représenté, les bras et les vérins sont articulés sur les côtés de la superstructure 10. Des systèmes de transmission de type quelconque, par exemple par pignons et chaînes, sont dans le cas présent logés à l'intérieur des bras 15 pour assurer la propulsion de l'engin, les roues 17 constituant ainsi des roues motrices. Il va de soi toutefois que des moyens de propulsion différents, tels que des moteurs hydrauliques de roues, pourraient également être prévus si désiré.

Les chambres des vérins 18 associés aux roues 17 sont en communication permanente deux à deux, de telle sorte que lorsqu'une action extérieure tend à déplacer l'une des roues 17 vers le haut, l'autre roue se déplace de la même amplitude vers le bas selon un mouvement compensateur. Cette communication permet aux quatre roues de la machine de demeurer en contact avec le sol, quel que soit le profil du terrain.

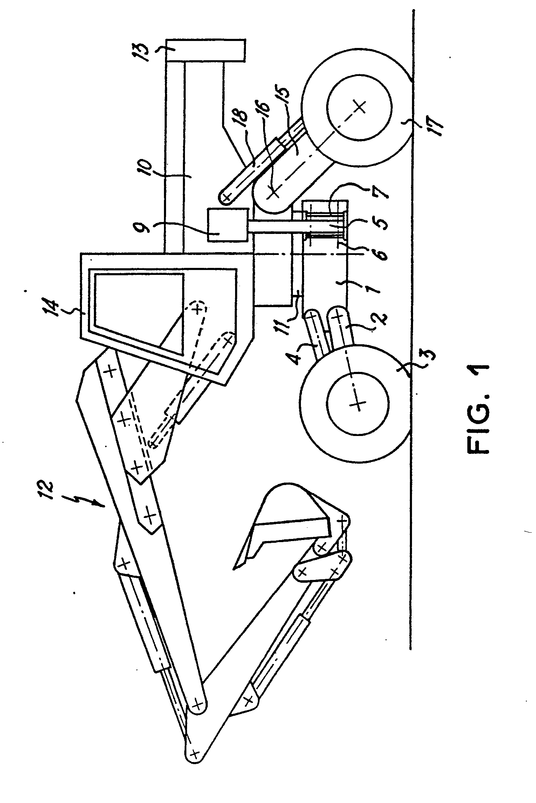

On a montré, sur les Fig. 1 et 2, la condition de la machine lors de son déplacement sur route. On voit que, dans cette condition, les bras 15 sont abaissés, de sorte que la machine repose sur le sol, à l'avant par les roues 3, et à l'arrière par les roues 17, les stabilisateurs 5 étant relevés presque verticalement sur les côtés. L'entraînement des roues motrices 17 comme indiqué plus loin assure alors la propulsion de la machine. La commande des bras 2 et 15 au moyen des vérins hydrauliques 4 et 18 permet de régler à volonté la garde au sol de la machine, notamment de lui donner une faible garde au sol pour son déplacement sur route, ce qui fournit une bonne stabilité. Pour un déplacement sur un mauvais terrain, la garde au sol peut être augmentée à volonté par la sortie des vérins.

Dans la condition de transport considérée, on comprend, comme cela est indiqué en traits mixtes sur la Fig. 2, qu'il est possible de faire pivoter d'un certain angle l'une par rapport à l'autre le châssis inférieur 1 et la superstructure 10 autour de la couronne d'orientation 11, ce qui permet de diriger la machine par suite de sa nature articulée.

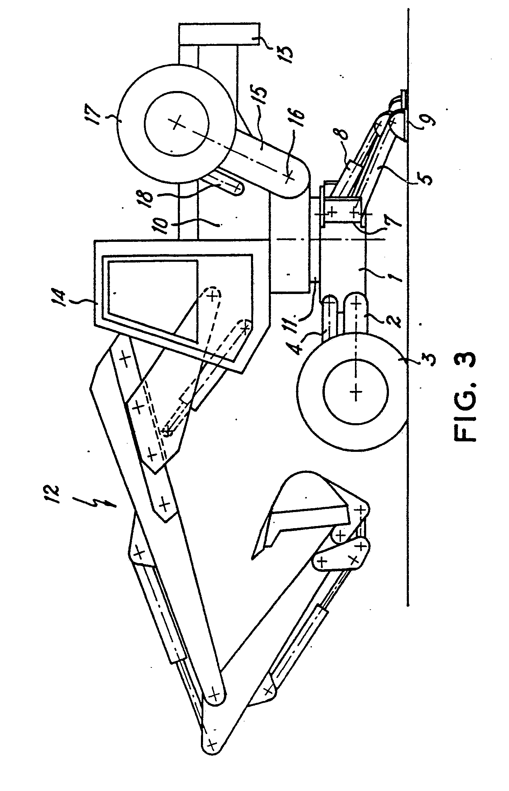

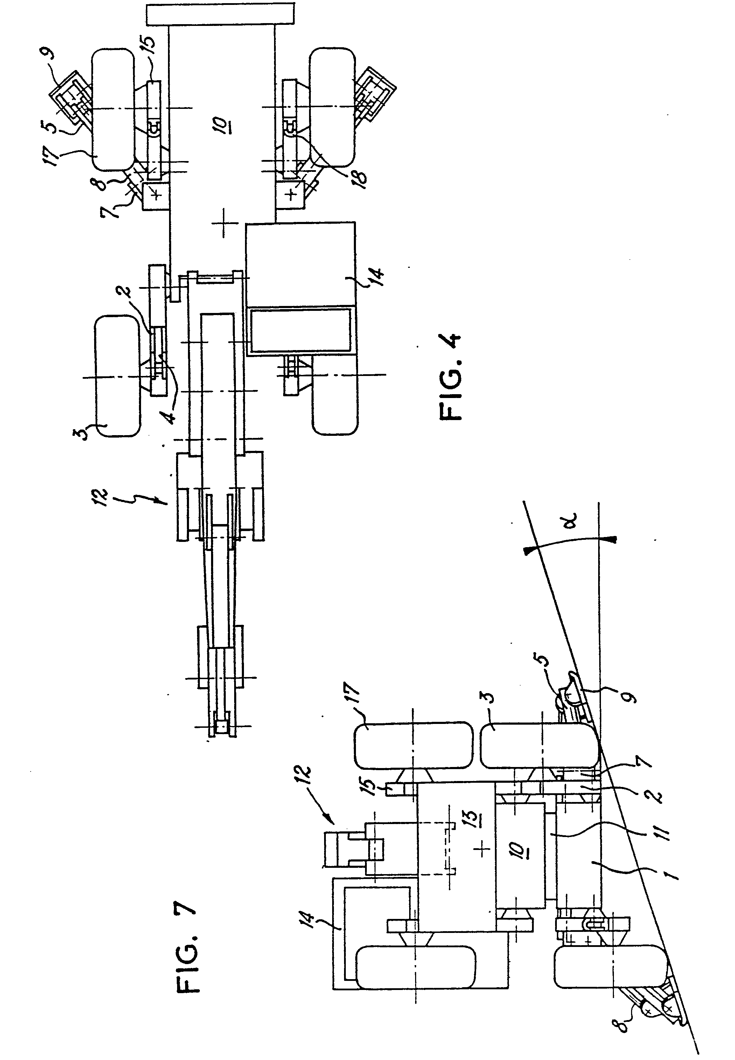

On a représenté, sur les Fig. 3 et 4, la mise en condition de travail de la machine. Pour cette opération, les stabilisateurs 5 sont rabattus autour des axes horizontaux 6 au moyen des vérins hydrauliques 8 et ils sont orientés par les supports 7 de façon à prendre une orientation appropriée pour la stabilité de la machine lors du travail, par exemple une orientation sensiblement à 45° par rapport à l'axe longitudinal de la machine comme visible sur la Fig. 4. On voit également, sur la Fig. 3, que les bras 2 portant les roues 3 sont commandés de façon à réduire sensiblement la garde au sol.

Les bras porte-roues 15 sont par ailleurs relevés de façon telle que les roues 17 soient dirigées sensiblement vers le haut, ces roues se trouvant alors avec les bras dans le gabarit de la superstructure 10.

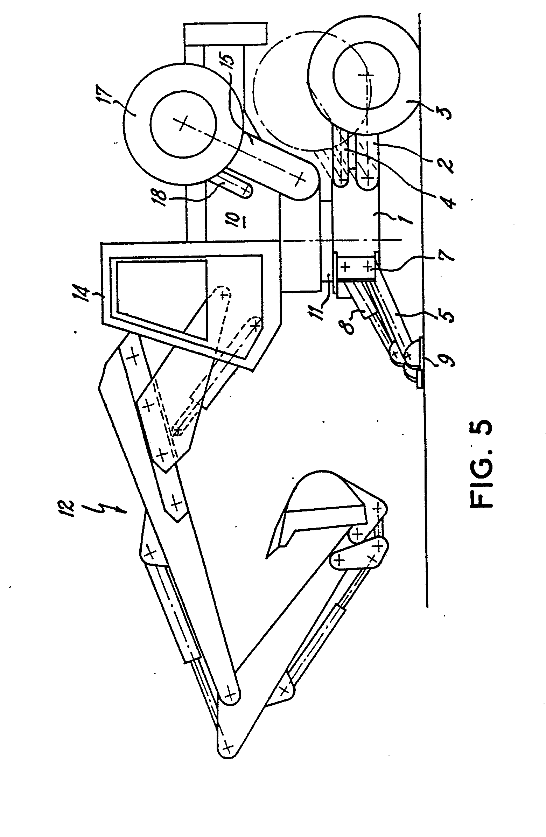

Quand la condition représentée sur les Fig. 3 et 4 est obtenue, l'orientation de la superstructure 10 est commandée de façon telle que l'équipement de travail soit orienté vers les stabilisateurs 5, ce qui fournit une stabilité optimum lors du travail. Le travail peut avoir lieu alors de façon normale. Pour augmenter la profondeur de travail, il est également possible de commander au moyen des vérins 4 le relevage des bras 2, la machine venant alors prendre appui sur le sol par son châssis inférieur 1, la stabilité latérale étant toujours fournie par les stabilisateurs 5, dont la position dans le plan vertical est réglée en conséquence. On voit en particulier à l'examen de la Fig. 5 que, dans cette condition, les roues 3 indiquées en traits mixtes occupent une position correspondant à un dégagement à l'arrière de la superstructure 10, ce qui ne gêne donc pas l'orientation de celle-ci.

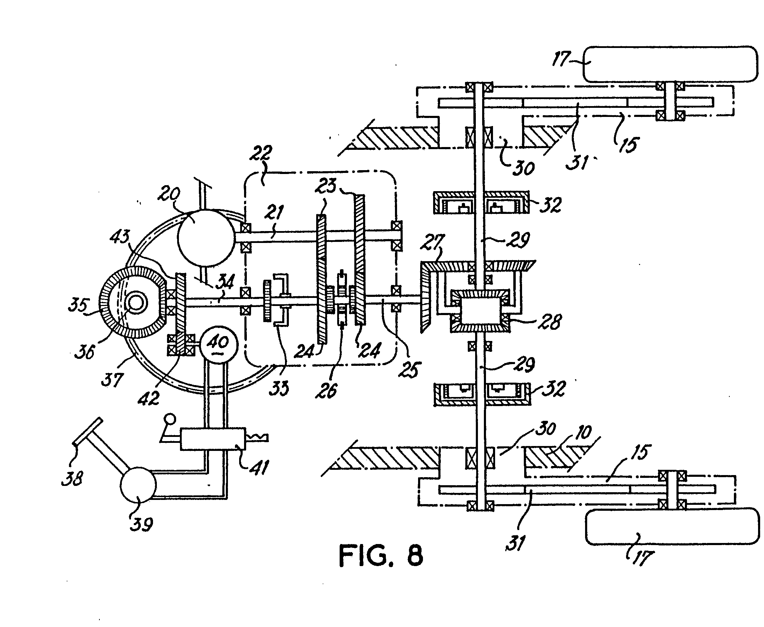

On a montré sur la Fig. 7 la position occupée par la machine pour creuser par exemple une tranchée dans une direction perpendiculaire à la pente d'un terrain.

Pour effectuer un travail de ce type, les vérins 4 de réglage des bras 2 sont soumis à une commande différentielle, et il en est de même des vérins 8 des stabilisateurs 5, de façon à maintenir la machine dans la position verticale représentée. La stabilité au travail est alors très bonne et aucun basculement de la machine n'est à craindre, l'équipement de travail pouvant travailler verticalement.

On conçoit d'ailleurs que cette position verticale de la machine peut être obtenue lors d'un déplacement de cette machine sur un sol en dévers, par la commande appropriée des bras 2 portant les roues 3 et du fait de la communication existant, comme indiqué précédemment, entre les vérins 16 associés aux bras 15 portant les roues 17.

On a représenté sur la Fig. 8 un mode de réalisation de système de transmission utilisable sur la machine faisant l'objet de l'invention pour assurer sa propulsion, la commande d'orientation de la superstructure 10 et la commande de direction pendant le déplacement de la machine.

L'agencement représenté comprend un moteur hydraulique principal 20, qui est entraîné de toute manière convenable à partir d'une pompe prévue sur la machine et dont la sortie entraîne un premier arbre 21 d'une boîte de transfert 22. Cet arbre 21 porte des roues dentées 23 qui engrènent avec des roues dentées 24 montées sur un arbre secondaire 25 de la boîte de transfert 22, cet arbre étant associé à un baladeur 26 qui permet la solidarisation sélective de l'une ou l'autre des roues dentées 24 avec l'arbre 25, pour fournir des vitesses différentes à la sortie de la boîte de transfert 22. Cet arbre secondaire 25 constitue l'arbre de propulsion de la machine. Il entraîne par un couple conique 27 un différentiel 28 de type classique qui, de son côté, entraîne deux demi-arbres de roues 29 assurant, par l'intermédiaire de trains épicycloïdaux 30 et d'une transmission par pignons et chaînes 31 logée dans les bras porte-roues 15, l'entraînement des roues arrière 17 de la machine. Chaque demi-arbre 29 porte un frein 32.

L'arbre secondaire 25 de la boîte de transfert 22 peut entraîner, par l'intermédiaire d'un système de crabotage 33, un autre arbre de sortie 34 qui assure lui-même, par l'intermédiaire d'un couple conique 35, l'entraînement d'un pignon 36 engrenant avec une couronne dentée 37 qui constitue l'élément actif de la couronne d'orientation 11 de la superstructure 10 de la machine. Ainsi, lors du crabotage du dispositif 33, le moteur principal 20 assure l'orientation de la superstructure 10 de la machine de la manière désirée. Le blocage de l'orientation peut être assuré par les freins 32.

On a représenté également de façon schématique sur la Fig. 8 un volant 38 qui est associé à un dispositif 39 de commande hydraulique de direction, assurant la commande d'une petite pompe hydraulique 40 à travers une valve 41. L'arbre de sortie de cette pompe hydraulique porte un pignon 42 qui engrène avec une roue dentée 43 portée par l'arbre 34.

Lorsque le dispositif 33 est décraboté et que la valve 41 est en position de communication, la manoeuvre du volant 38 assure, par le dispositif 39, le moteur auxiliaire 40 et l'engrenage 42, 43, l'entraînement de l'arbre 34, et par celui-ci et le couple conique 35 l'entraînement du pignon 36 et par suite de la couronne dentée 37, pour provoquer un déplacement angulaire de faible amplitude de la superstructure 10 par rapport au châssis inférieur 1, comme visible sur la Fig. 2, ce qui permet ainsi de diriger la machine lors de sa marche.

La valve 41 permet, lorsqu'elle est amenée dans une position de coupure, d'éviter l'entraînement du volant pendant les manoeuvres d'orientation de la superstructure 10 à partir du moteur principal 20, comme indiqué précédemment.

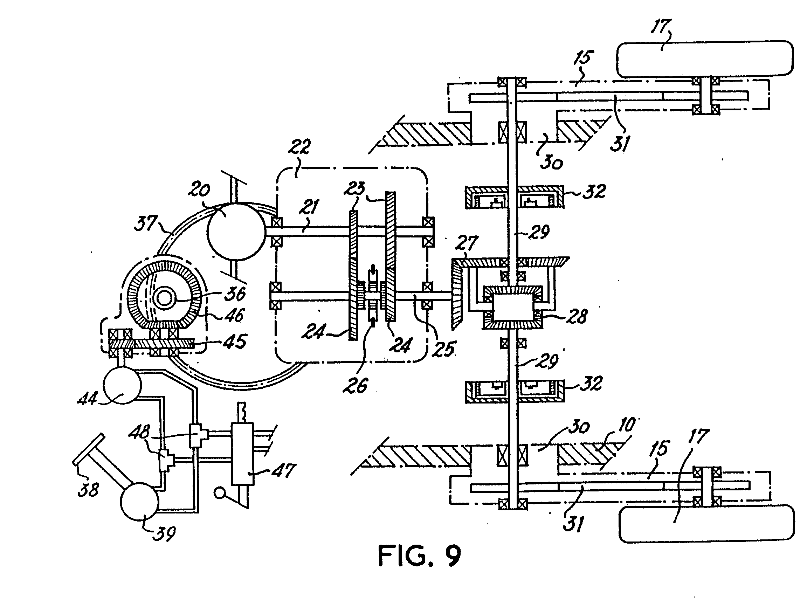

On a montré sur la Fig. 9, sur laquelle les éléments analogues à ceux visibles sur la Fig. 8 ont été désignés par les mêmes références, une variante de réalisation dans laquelle l'orientation et la direction pendant la marche sont assurées toutes deux à partir d'un moteur auxiliaire 44 dont l'arbre de sorte entraîne un engrenage 45 qui commande lui-même le couple conique 46 entraînant le pignon 36 en prise avec la couronne dentée d'orientation 37. Une valve 47 est prévue ici entre le circuit comprenant le moteur auxiliaire 44 et le système de direction 38, 39 et l'alimentation hydraulique de la machine, afin d'assurer dans une position, par l'intermédiaire de valves auxiliaires 48, l'alimentation directe du moteur auxiliaire 44, pour l'orientation de la superstructure 10, en isolant ici encore le volant, et dans l'autre position la mise en communication du dispositif 39 avec le moteur auxiliaire 44, en isolant l'ensemble du système hydraulique de la machine, pour la commande de direction.

On voit qu'on obtient ainsi une pelle hydraulique automotrice articulée pouvant se déplacer soit avec une faible garde au sol pour le transport sur route, soit avec une garde au sol importante pour un déplacement en terrain accidenté, par la commande des vérins hydrauliques 4 et 18 associés aux bras porte-roues 2 et 15. La direction de cette pelle hydraulique est assurée par un déplacement relatif entre le châssis inférieur 1 et la superstructure 10 par des moyens simples, sans pont directeur et d'une manière fournissant un rayon de braquage de valeur réduite, assurant une bonne maniabilité.

Lorsque la machine se déplace sur un terrain incliné dans une direction perpendiculaire à la pente, elle peut conserver une position horizontale par la commande appropriée des vérins 4 des roues avant 3 et par la compensation entre les vérins 18 des roues arrière 17. Cette position peut être conservée par la combinaison de l'action des stabilisateurs avec celle des roues, ce qui permet une correction de dévers importants, rendant possible le creusement de tranchées verticales perpendiculairement à la pente. Enfin, comme indiqué précédemment, la machine peut reposer sur le sol par son châssis inférieur, ce qui augmente la profondeur de creusement.

Des modifications peuvent être apportées aux modes de réalisation décrits, dans le domaine des équivalences techniques, sans s'écarter de l'invention.

## Revendications

1. Engin de travaux publics tel que pelle hydraulique automotrice comprenant un châssis inférieur (1) muni de deux roues porteuses (3) et de stabilisateurs (5) relevables ou effaçables, de telle sorte que ce châssis puisse prendre appui sur le sol de façon sélective simplement par ses roues porteuses ou à la fois par lesdites roues porteuses et par ses stabilisateurs, et une superstructure (10) portant un équipement de travail (12) et monté de façon orientable autour d'un axe vertical sur ce châssis inférieur (1), caractérisé en ce qu'une paire de roues porteuses (17) est disposée sur cette superstructure, des moyens (15, 18) étant prévus pour déplacer cette paire de roues porteuses entre une position d'appui sur le sol et une position relevée.

2. Engin de travaux publics suivant la revendication 1, caractérisé en ce que des moyens (2, 4) sont prévus pour faire varier la position des roues porteuses (3) du châssis inférieur (1) relativement à celui-ci, pour régler la garde au sol de la machine, ces moyens étant agencés de préférence de façon à permettre le relevage de ces roues porteuses pour faire reposer la machine sur le sol par son châssis inférieur.

3. Engin de travaux publics suivant la revendication 1 ou 2, caractérisé en ce que les moyens de déplacement (2, 4, 15, 18) des roues porteuses comprennent des bras (2, 15) pouvant pivoter autour d'axes horizontaux et portant l'une au moins des paires de roues porteuses (3, 17) du châssis inférier (1) ou de la superstructure (10) et des moyens tels que des vérins hydrauliques (4, 18) ou analogues, prévus pour commander le pivotement de ces bras pour le réglage et le relevage des roues porteuses.

4. Engin de travaux publics suivant la revendication 3, caractérisé en ce que les axes horizontaux (16) de pivotement des bras porteroues (4, 15) sont orientés transversalement à l'axe longitudinal de la machine.

5. Engin de travaux publics suivant la revendication 1, caractérisé en ce que les stabilisateurs (5) sont montés sur les côtés opposés du châssis inférieur (1) de manière à pouvoir pivoter autour d'axes horizontaux (6), et des moyens tels que des vérins hydrauliques (8) sont prévus pour assurer leur déplacement entre une position de travail et d'appui sur le sol et une position relevée.

6. Engin de travaux publics suivant la revendication 5, caractérisé en ce que les stabilisateurs (5) sont montés de façon à pouvoir pivoter sur le châssis inférieur (1) autour d'axes verticaux, pour régler leur orientation par rapport à ce châssis inférieur.

7. Engin de travaux publics suivant l'une quelconque des revendications 1, 5 ou 6, caractérisé en ce que les roues porteuses (3) du châssis inférieur (1) sont montées vers une extrémité de ce châssis et les stabilisateurs (5) sont montés vers l'autre extrémité dudit châssis.

8. Engin de travaux publics suivant la revendication 1, dans lequel le montage orientable de la superstructure (10) sur le châssis inférieur (1) est réalisé au moyen d'une couronne d'orientation en soi connue (11), comprenant une couronne dentée (37) attaquée par un pignon (36) ou organe analogue, caractérisé en ce que des moyens sont prévus pour assurer l'entraînement de ce pignon (36) et ainsi de la couronne d'orientation (11) de façon sélective à partir d'un mécanisme d'orientation ou à partir d'un volant de conduite (38) de la machine, dont la direction est ainsi assurée par articulation entre le châssis inférieur (1) et la superstructure (10), autour de la couronne d'orientation (11).

9. Engin de travaux publics suivant la revendication 8, caractérisé en ce que les moyens d'entraînement du pignon (36) comprennent un moteur tel qu'un moteur hydraulique (20) entraînant les roues motrices (17) par l'intermédiaire d'une boîte de transfert (22) ou d'un ensemble analogue et de transmissions (30, 31) logées dans les arbres porte-roues (15), un arbre de sortie (34) de la boîte de transfert (22) étant relié au dispositif de commande (35, 36) de la couronne d'orientation (11), ce dispositif étant relié par ailleurs par des moyens débrayables (41) au volant de conduite (38) de la machine.

10. Engin de travaux publics suivant la revendication 8, caractérisé en ce que le dispositif de commande d'orientation comprend un petit moteur hydraulique (44) pouvant être relié, à travers des valves (47, 48) ou organes équivalents, au système hydraulique de la machine ou au volant de conduite (38).

## Patentansprüche

1. Technisches Hilfsfahrzeug, wie Hydrauliklader mit Radantrieb, das einen unteren Rahmen (1), der mit zwei Laufrädern (3) und einziehbaren oder ausfahrbaren Stabilisatoren (5) versehen ist, so daß dieser Rahmen auf dem Boden wahlweise einfach mit seinen Laufrädern oder gleichzeitig mit den erwähnten Laufrädern und seinen Stabilisatoren aufliegen kann, und einen Oberbau (10) aufweist, der ein Arbeitsgerät (12) trägt und um eine vertikale Achse ausrichtbar auf diesem unteren Rahmen (1) montiert ist, dadurch gekennzeichnet, daß ein Paar von Laufrädern (17) auf diesem Oberbau angeordnet ist und Einrichtungen (15, 18) vorgesehen sind, um dieses Paar von Laufrädern zwischen einer Auflageposition auf dem Boden und einer angehobenen Position zu verschieben.

2. Technisches Hilfsfahrzeug nach Anspruch 1, dadurch gekennzeichnet, daß Einrichtungen (2, 4) vorgesehen sind, um die Position der Laufräder (3) des unteren Rahmens (1) bezüglich desselben zu ändern, um die Bodenfreiheit der Maschine einzustellen, wobei diese Einrichtungen vorzugsweise so betätigt werden, daß das Anheben dieser Laufräder möglich ist, um die Maschine auf dem Boden mit ihrem unteren Rahmen ruhen zu lassen.

3. Technisches Hilfsfahrzeug nach Anspruch 1 oder 2, dadurch gekennzeichnet, daß die Verschiebeeinrichtungen (2, 4, 15, 18) der Laufräder Arme (2, 15), die um horizontale Achsen schwenken können, und wenigstens eines der Paare von Laufrädern (3, 17) des unteren Rahmens (1) oder des Oberbaus (10) tragen und Einrichtungen, wie hydraulische Kolben-Zylinder-Einheiten (4, 18), oder analoge Einrichtungen aufweisen, die zur Steuerung der Verschwenkung dieser Arme für die Einstellung und das Anheben der Laufräder vorgesehen sind.

4. Technisches Hilfsfahrzeug nach Anspruch 3, dadurch gekennzeichnet, daß die horizontalen Schwenkachsen (16) der die Räder haltenden Arme (2, 15) quer zur Längsachse der Maschine ausgerichtet sind.

5. Technisches Hilfsfahrzeug nach Anspruch 1, dadurch gekennzeichnet, daß die Stabilisatoren (5) auf den gegenüberliegenden Seiten des unteren Rahmens (1) derart angebracht sind, daß sie um horizontale Achsen (6) schwenken können, und daß Einrichtungen, wie hydraulische Kolben-Zylinder-Aggregate (8), vorgesehen sind, um ihre Verschiebung zwischen einer Arbeits- und Auflagestellung auf dem Boden und einer angehobenen Position zu gewährleisten.

6. Technisches Hilfsfahrzeug nach Anspruch 5, dadurch gekennzeichnet, daß die Stabilisatoren (5) so angebracht sind, daß sie auf dem unteren Rahmen (1) um vertikale Achsen schwenken können, um ihre Ausrichtung bezüglich dieses unteren Rahmens einzustellen.

7. Technisches Hilfsfahrzeug nach einem der Ansprüche 1, 5 oder 6, dadurch gekennzeichnet, daß die Laufräder (3) des unteren Rahmens (1) zu einem Ende dieses Rahmens hin angebracht sind, und daß die Stabilisatoren (5) zum anderen Ende dieses Rahmens hin angebracht sind.

8. Technisches Hilfsfahrzeug nach Anspruch 1, bei welchem die ausrichtbare Anbringung des Oberbaus (10) auf dem unteren Rahmen (1) mittels eines an sich bekannten Ausrichtkranzes (11) ausgeführt ist, der einen Zahnkranz (37) aufweist, in den ein Ritzel (36) oder ein analoges Organ eingreift, dadurch gekennzeichnet, daß Einrichtungen vorgesehen sind, um den Antrieb dieses Ritzels (36) sowie des Ausrichtkranzes (11) selektiv ausgehend von einem Ausrichtmechanismus oder ausgehend von einem Steuerrad (38) der Maschine zu gewährleisten, dessen Richtung ebenfalls durch die Verschwenkbarkeit zwischen dem unteren Rahmen (1) und dem Oberbau (10) um den Ausrichtkranz (11) gesichert ist.

9. Technisches Hilfsfahrzeug nach Anspruch 8, dadurch gekennzeichnet, daß die Antriebseinrichtungen des Ritzels (36) einen Motor, beispielsweise einen hydraulischen Motor (20) umfassen, der die Treibräder (17) mittels eines Übertragungsgetriebes (22) oder einer analogen Anordnung und eines Transmissions-getriebes (30, 31) antreibt, die in den die Räder tragenden Armen (15) aufgenommen sind, wobei eine Abtriebswelle (34) des Übertragungsgetriebes (22) mit einer Steuereinrichtung (35, 36) des Ausrichtkranzes (11) verbunden ist und diese Einrichtungen andererseits durch auskuppelbare Einrichtungen (41) mit dem Steuerrad (38) der Maschine verbunden sind.

10. Technisches Hilfsfahrzeug nach Anspruch 8, dadurch gekennzeichnet, daß die Steuereinrichtung für die Ausrichtung einen kleinen Hydraulikmotor (44) umfaßt, der über Ventile (47, 48) oder äquivalente Organe mit dem Hydrauliksystem der Maschine oder dem Steuerrad (38) verbunden werden kann.

**Claims**

1. Public works unit such as a self-propelled hydraulic shovel comprising a lower chassis (1) provided with two carrying wheels (3) and stabilisers (5) which may be raised or withdrawn in such a way that the chassis can be supported selectively on the ground simply by its carrying wheels or both by the said carrying wheels and by its stabilisers, and a superstructure (10) carrying working equipment (12) and swivel-mounted around a vertical axis on this lower chassis (1), characterised in that a pair of carrying wheels (17) is arranged on this superstructure, means (15, 18) being provided for displacing this pair of carrying wheels between a supporting position on the ground and a raised position.

2. Public works unit according to Claim 1, characterised in that means (2, 4) are provided to vary the position of the carrying wheels (3) of the lower chassis (1) relative to the latter in order to adjust the ground clearance of the machine, these means being arranged preferably so as to allow the carrying wheels to be raised to cause the machine to rest on the ground on its lower chassis.

3. Public works unit according to Claims 1 or 2, characterised in that the means of displacement (2, 4, 15, 18) of the carrying wheels comprise arms (2, 15) which are capable of tilting around horizontal axes and which carry at least one of the pairs of carrying wheels (3, 17) of the lower frame (1) or of the superstructure (10) and means such as hydraulic jacks (4, 18) or similar ones which are scheduled to control the tilting of these arms for the adjustment and the raising of the carrying wheels.

4. Public works unit according to Claim 3, characterised in that the horizontal axes (16) of the tilting of the wheel carrier arms (4, 15) are aligned transversely to the longitudinal axis of the machine.

5. Public works unit according to Claim 1, characterised in that the stabilisers (5) are mounted on opposite sides of the lower chassis (1) so as to be capable of tilting around horizontal axes (6) and that provision is made for means such as hydraulic jacks (8) to ensure their displacement between a working and supporting position on the ground and a raised position.

6. Public works unit according to Claim 5, characterised in that the stabilisers (5) are mounted so as to be capable of slewing on the lower frame (1) around the vertical axes to adjust their orientation in relation to the lower chassis.

7. Public works unit according to any one of Claims 1, 5 or 6, characterised in that the carrying wheels (3) of the lower chassis (1) are mounted towards one end of this chassis and the stabilisers (5) are mounted towards the other end of the said chassis.

8. Public works unit according to Claim 1, wherein the adjustable mounting of superstructure (10) on the lower chassis (1) is achieved by means of a slew ring (11) known in itself, comprising a crown gear (37) actuated by a pinion 36 or a similar device, characterised in that provision is made for means to ensure the drive of this pinion (36) and thus of the slew ring (11) in a selective manner on the basis of an orientating mechanism or on the basis of a steering wheel (38) of the machine whose guidance is thus ensured by the articulation between the lower chassis (1) and the superstructure (10) around the slew ring (11).

9. Public works unit according to Claim, 8 characterised in that the driving means of pinion (36) comprise a motor such as a hydraulic motor (20) driving the drive wheels (17) via a gear box (22) or a similar assembly and the transmissions (30, 31) accommodated in the wheel carrier shafts (15), an output shaft (34) of gear box (22) being connected to the control device (35, 36) of the slew ring (11), this device being connected moreover via declutching means (41) to the steering wheel (38) of the machine.

10. Public works unit according to Claim 8, characterised in that the orientation control device comprises a small hydraulic motor (44) which can be connected via valves (47, 48) or similar devices to the hydraulic system of the machine or to the steering wheel (38).

FIG. 1

0010 542

FIG. 2

FIG. 3

FIG. 7

FIG. 4

12

3

2

4

17

5

9

7

8

15

10

14

18

14

12

15

17

3

13

10

5

9

8

7

2

11

1

α

4

0010 542

FIG. 5

FIG. 6

FIG. 8

FIG. 9